# EUROPEAN PATENT SPECIFICATION

(11) **EP 1 859 959 B1**
(45) Date of publication and mention of the grant of the patent: **08.06.2011**
(21) Application number: 06714549.0
(22) Date of filing: 24.02.2006
(51) Int. Cl.: B60C 5/14, B60C 15/00, B60C 15/06

(54) **HEAVY-LOAD TIRE**
REIFEN FÜR SCHWERLASTEN
PNEU POUR CHARGEMENT LOURD

(30) Priority: 18.03.2005 JP 2005079616
(43) Date of publication of application: 28.11.2007
(73) Proprietor: Bridgestone Corporation, Tokyo 104-8340 (JP)
(72) Inventor: NAKANE, Shinsuke, 1, Ogawahigashi-cho, Kodaira-shi, Tokyo, (JP); NOHARA, Daisuke, 1, Ogawahigashi-cho, Kodaira-shi, Tokyo, (JP)
(74) Representative: Whalley, Kevin
(86) International application number: PCT/JP2006/303410
(87) International publication number: WO 2006/100872

(56) References cited:
- JP-A- 07 024 928
- JP-A- 07 502 471
- JP-A- 63 082 802
- JP-A- 2002 283 814
- JP-A- 2004 176 048

## Description

The present invention relates to a tire for heavy loading. More specifically, the present invention relates to a tire for heavy loading which has excellent air holding property and a durability of a bead part and can stand use over a long period of time by disposing a member having an excellent oxygen permeation resistance and an excellent flexibility at least in the periphery of a bead centering on a bead toe part of the tire.

An inner liner layer comprising low gas permeable butyl base rubber such as a butyl rubber, a halogenated butyl rubber and the like as a principal component has so far been disposed up to the periphery of a toe tip in an inner face of a pneumatic tire in order to prevent air leaking and maintain tire pressure at a fixed level. However, a rubber composition for an inner liner having a large content of the above butyl base rubbers shrinks to a large extent in an unvulcanized state, and it can not completely cover the toe rubber in certain cases. Oxygen filled in the tire brings about oxidative deterioration of rubber members disposed in the circumference of a bead part, whereby crack growth resistance at a ply end and durability of the toe rubber are reduced.

In order to solve the above problems, it is important in improving tire durability to more surely protect a bead part and a toe tip from oxygen. The present inventors have filed Japanese Patent Application No. 338789/2000 for the purpose of inhibiting oxidative deterioration of a bead part and proposed to dispose a member blended with butyl base rubber such as a butyl rubber, a halogenated butyl rubber and the like having a good air permeation resistance at a toe part, whereby an effect of improving the durability has been obtained. However, durability is more and more strongly required for tires in the market, and a reduction in thickness of a gauge in an inner liner layer is desired to be further improved as social demand to improve energy saving has increased in recent years. This is because members which have an excellent oxygen permeation resistance and a high flexibility and which can be reduced in thickness of a gauge have not yet been found.

On the other hand, it is known that an ethylene-vinyl alcohol copolymer (hereinafter abbreviated as EVOH) has excellent gas barriering property. An air permeation amount of EVOH is one hundredth or less of an inner liner rubber composition blended with butyl base rubber, and therefore the inner pressure holding property can be enhanced to a large extent even with a thickness of 50 µm or less. In addition thereto, the tire can be reduced in weight. Accordingly, it is tried to use EVOH for an inner liner of a tire in order to improve air permeability of the tire (refer to, for example, patent document 1).

However, an elastic modulus of this EVOH is high to a large extent as compared with those of rubbers usually used for tires, and therefore breakage and cracks have been caused in certain cases by deformation in bending. Accordingly, when using an inner liner comprising EVOH, there has occurred the problem that an inner pressure holding property of a tire before use is enhanced to a large extent but an inner pressure holding property of the tire after use which is subjected to bending deformation in rolling of the tire is reduced in certain case as compared with that of the tire before use.
An inner liner for an inner face of a tire prepared by using a resin composition comprising 60 to 99 % by weight of an ethylene-vinyl alcohol copolymer having an ethylene content of 20 to 70 mole % and a saponification degree of 80 % or more and 1 to 40 % by weight of a hydrophobic surfactant is disclosed in order to solve the above problem (refer to, for example, patent document 2). However, the flexibility is not necessarily sufficiently satisfactory.
Then, the present inventors have repeated researches of a material having a flexibility of a higher degree while maintaining gas barriering property, and they have found that a modified ethylene-vinyl alcohol copolymer obtained by reacting 1 to 50 mass parts of an epoxy compound with 100 mass parts of an ethylene-vinyl alcohol copolymer having an ethylene unit of 25 to 50 mole % is excellent as a material for an inner liner (refer to, for example, patent document 3).

Patent document 1: Japanese Patent Application Laid-Open No. 40207/1994
Patent document 2: Japanese Patent Publication Laid-Open No. 52904/2002
Patent document 3: Japanese Patent Publication Laid-Open No. 176048/2004

Attention is also drawn to the disclosures of JP-2002-283814 A and JP-7-502471 A.

In light of the situation described above, an object of the present invention is to provide a tire for heavy loading which has excellent air holding property and durability of a bead part and can stand use over a long period of time by disposing a member having an excellent oxygen permeation resistance and an excellent flexibility at least in the periphery of a bead centering on a bead toe part of the tire.
Intensive researches repeated by the present inventors in order to develop a pneumatic tire having the preferred properties described above have resulted in finding that the above object can be achieved by providing an air blocking layer in which an oxygen permeation amount is a certain value or lower and which has excellent flexibility at a specific place at least in the periphery of a bead centering on a bead toe part of the tire.
Further, it has been found that the above object can effectively be achieved by using a member having at least a layer comprising particularly a specific modified ethylene-vinyl alcohol copolymer as the air blocking layer described above.
The present invention has been completed based on the above findings.

That is, the present invention provides:
(1) a tire for heavy loading in which an inner surface is covered with an inner liner, wherein an air blocking layer having a thickness of 1 mm or less and an oxygen permeation amount of 3 × 10⁻¹³ cm³·cm/cm²·sec·Pa or less at 60 °C and 65 % RH is provided on a whole outermost layer of an inner liner layer so that an end of the air blocking layer is set within 100 mm from a toe tip of a bead part in a direction along a bead base line,
(2) a tire for heavy loading in which an inner surface is covered with an inner liner, wherein an air blocking layer having a thickness of 1 mm or less and an oxygen permeation amount of 3 × 10⁻¹³ cm³·cm/cm²·sec·Pa or less at 60 °C and 65 % RH is provided on a whole outermost layer of an inner liner layer so that an end of the air blocking layer is set within 10 mm from a toe end of a bead part in a direction along an inner surface of the tire,
(3) a tire for heavy loading in which an inner surface is covered with an inner liner, wherein an air blocking layer having a thickness of 1 mm or less and an oxygen permeation amount of 3 × 10⁻¹³ cm³·cm/cm²·sec·Pa or less at 60 °C and 65 % RH is provided so that an end of the air blocking layer is set within 10 mm from a toe tip of a bead part in a direction along an inner surface of the tire; the other end thereof is overlapped partially with the inner liner; and the overlapped part is provided on an outermost layer of the inner liner layer,
(4) the tire for heavy loading as described in any of the above items (1) to (3), wherein a toe rubber is provided at a toe tip of the bead part, and a rubber composition in which 20 to 40 mass % of a rubber component comprises a butyl rubber and/or a halogenated butyl rubber is used for the above toe rubber,
(5) the tire for heavy loading as described in any of the above items (1) to (4), wherein the air blocking layer comprises at least one layer containing a modified ethylene-vinyl alcohol copolymer obtained by reacting 1 to 50 mass parts of an epoxy compound with 100 mass parts of an ethylene-vinyl alcohol copolymer having an ethylene unit of 25 to 50 mole %,
(6) the tire for heavy loading as described in the above item (5), wherein the epoxy compound is glycidol or epoxypropane,
(7) the tire for heavy loading as described in the above item (5) or (6), wherein the ethylene-vinyl alcohol copolymer having an ethylene unit of 25 to 50 mole % which is used for modification has a saponification degree of 90 mole % or more,
(8) the tire for heavy loading as described in any of the above items (5) to (7), wherein the layer containing the modified ethylene-vinyl alcohol copolymer is a layer having an oxygen permeation amount of 3 × 10⁻¹⁵ cm³·cm/cm²·sec·Pa or less at 60 °C and 65 % RH,
(9) the tire for heavy loading as described in any of the above items (5) to (8), wherein the layer containing the modified ethylene-vinyl alcohol copolymer is a cross-linked layer,
(10) the tire for heavy loading as described in any of the above items (5) to (9), wherein the layer containing the modified ethylene-vinyl alcohol copolymer is a layer having a thickness of 50 µm or less,
(11) the tire for heavy loading as described in any of the above items (5) to (10), wherein the air blocking layer comprises the layer containing the modified ethylene-vinyl alcohol copolymer and a layer containing a rubber-like elastic body which is adjacent to the layer,
(12) the tire for heavy loading as described in the above item (11), wherein the air blocking layer is obtained by sticking the layer containing the modified ethylene-vinyl alcohol copolymer onto the layer containing the rubber-like elastic body via at least one adhesive layer,
(13) the tire for heavy loading as described in the above item (11) or (12), wherein the layer containing the rubber-like elastic body is a layer having an oxygen permeation amount of 3 × 10⁻¹² cm³·cm/cm²·sec·Pa or less at 20 °C and 65 % RH,
(14) the tire for heavy loading as described in any of the above items (11) to (13), wherein the layer containing the rubber-like elastic body is a layer containing a butyl rubber and/or a halogenated butyl rubber,
(15) the tire for heavy loading as described in any of the above items (11) to (14), wherein the layer containing the rubber-like elastic body is a layer containing a diene base rubber,
(16) the tire for heavy loading as described in any of the above items (11) to (15), wherein the layer containing the rubber-like elastic body is a layer containing a thermoplastic urethane base elastomer,
(17) the tire for heavy loading as described in any of the above items (11) to (16), wherein the air blocking layer is obtained by sticking layers containing different rubber-like elastic bodies via at least one adhesive layer and
(18) the tire for heavy loading as described in any of the above items (11) to (17), wherein a thickness of the layer containing the rubber-like elastic body is 50 to 1500 µm in total.

In one following description, reference will be made to one accompanying drawings, wherein
Fig. 1 is a partial cross-sectional view showing a bead part of a tire for heavy loading before providing the air blocking layer used in the present invention.
Fig. 2 shows one embodiment of a bead part of the tire for heavy loading according to the present invention.
Fig. 3 shows another embodiment of a bead part of the tire for heavy loading according to the present invention.
Fig. 4 shows another embodiment of a bead part of the tire for heavy loading according to the present invention.
Fig. 5 shows another embodiment of a bead part of the tire for heavy loading according to the present invention.
Fig. 6 shows another embodiment of a bead part of the tire for heavy loading according to the present invention.

The tire for heavy loading according to the present invention is a tire in which an air blocking layer is provided mainly in the periphery of a bead and in an outermost layer of an inner liner layer. A position in which the above air blocking layer is provided includes five embodiments shown below.
The outermost layer shows a layer provided at a position brought into contact with air.

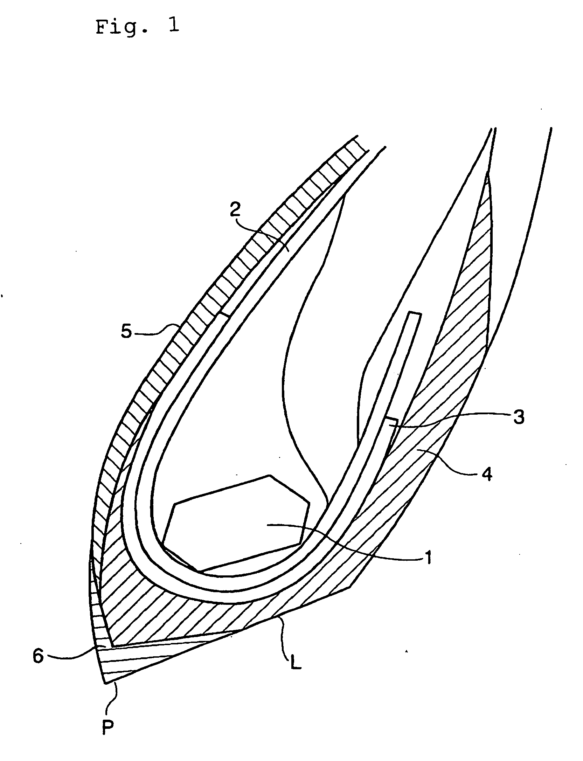

Fig. 1 is one example of a partial cross-sectional drawing showing mainly a bead part of a tire for heavy loading before providing the air blocking layer used in the present invention for explaining the respective embodiments of the tire for heavy loading of the present invention, wherein numeral 1 is a bead core; 2 is a radial carcass layer; 3 is a wire chafer layer; 4 is a rubber chafer layer; 5 is an inner liner layer; 6 is a toe rubber; P is a toe tip; and L is a bead base line.

The air blocking layer used for the pneumatic tire of the present invention has a thickness of 1 mm or less and an oxygen permeation amount of 3 × 10⁻¹³ cm³·cm/cm²·sec·Pa or less, preferably 7 × 10⁻¹⁴ cm³·cm/cm²·sec·Pa or less and more preferably 3 × 10⁻¹⁴ cm³·cm/cm²·sec·Pa or less at 60 °C and 65 % RH. If the above oxygen permeation amount exceeds 3 × 10⁻¹³ cm³·cm/cm²·sec·Pa, the purpose of the present invention can not sufficiently be achieved.

A lower limit value of a thickness of the air blocking layer shall not specifically be restricted as long as the oxygen permeation amount at 60 °C and 65 % RH satisfies 3 × 10⁻¹³ cm³·cm/cm²·sec·Pa or less, and it is usually about 10 µm.

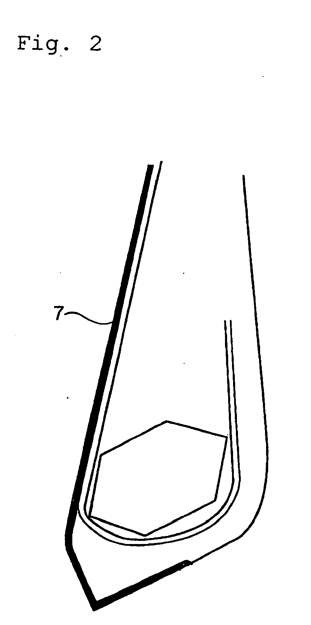

The tire of the first embodiment is a tire for heavy loading in which the above air blocking layer is provided, as shown in Fig. 2, on a whole outermost layer of a carcass layer so that an end of the air blocking layer is set within 100 mm from a toe tip of a bead part in a direction along a bead base line shown in Fig. 1. This embodiment is outside the scope of the invention as claimed.

The above air blocking layer provided as shown in Fig. 2 makes it possible to inhibit oxygen from being permeated from an inside of the tire more than conventional inner liner layers. Further, setting an end of the air blocking layer within 100 mm from a toe tip of the bead part in a direction along the bead base line makes it possible to inhibit oxygen from being permeated into the bead part and enhance durability of the bead part.

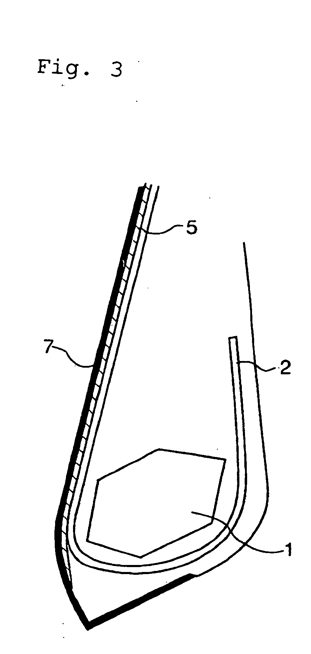

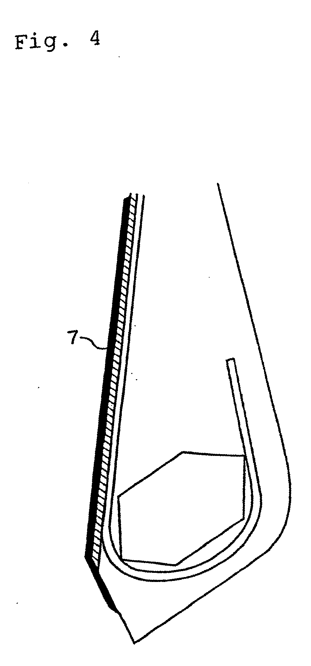

The tire of the second embodiment is a tire for heavy loading in which the above air blocking layer is provided, as shown in Fig. 3, on a whole outermost layer of an inner liner layer in the same form as in the first embodiment as is the case with the first embodiment.
The tire of the third embodiment is a tire for heavy loading in which the above air blocking layer is provided, as shown in Fig. 4, on a whole outermost layer of an inner liner layer so that an end of the air blocking layer is set within 10 mm from a toe tip of a bead part in a direction along an inner surface of the tire.

Both of the second and third embodiments assume a two layer structure with an inner liner of a conventional butyl rubber base excluding a periphery of a bead, and not only a rise in durability of the tire but also a reduction in a gauge of the above air blocking layer and inner liner layer becomes possible to make it possible to reduce the weight of the tire.

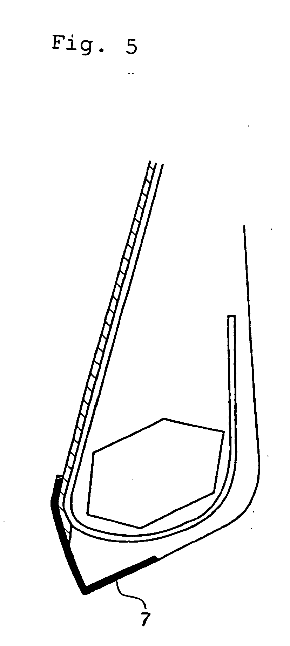

The tire of the fourth embodiment is a tire for heavy loading, wherein the above air blocking layer is provided, as shown in Fig. 5, so that an end of the air blocking layer is set within 100 mm from a toe tip of a bead part in a direction along a bead base line; the other end thereof is overlapped partially with the inner liner; and the overlapped part is provided on an outermost layer of the inner liner layer. This embodiment is outside the scope of the invention claimed.

The function of the bead part in the tire of the above embodiment is substantially the same as those of the tires in the first and second embodiments.

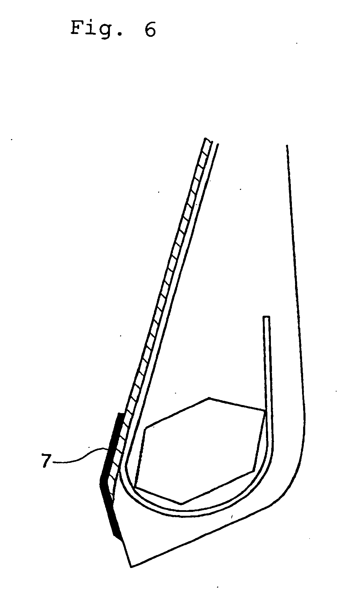

The tire of the fifth embodiment is a tire for heavy loading, wherein the above air blocking layer is provided, as shown in Fig. 6, so that an end of the air blocking layer is set within 10 mm from a toe tip of a bead part in a direction along an inner surface of the tire; the other end thereof is overlapped partially with the inner liner; and the overlapped part is provided on an outermost layer of the inner liner layer.

The function of the bead part in the tire of the above embodiment is substantially the same as that of the tire in the third embodiment.

The above air blocking layer in both of the fourth and fifth embodiments is provided mainly in the periphery of the bead, and variation in the position of an end of the inner liner caused by the shrinkage of the inner liner in non-vulcanization is covered by overlapping one end of the above air blocking layer with the inner liner layer in both cases. In addition thereto, the toe rubber can be prevented from being deteriorated; the bead part is improved in durability; and chipping of the toe in detaching a rim can be reduced.

In the respective suitable examples of 4: rubber chafer, 5: inner liner layer and 6: toe rubber which are shown in Fig. 1 in the present invention, used are an inner liner composition in which 80 mass % or more of a rubber component comprises a butyl rubber and/or a halogenated butyl rubber, a rubber chafer composition in which 10 mass % or less of a rubber component comprises a butyl rubber and/or a halogenated butyl rubber, and a toe rubber composition in which 20 to 40 mass % of a rubber component comprises a butyl rubber and/or a halogenated butyl rubber. In the above case, adhesion between the toe rubber and the inner liner and adhesion between the toe rubber and the rubber chafer can be enhanced.

Next, the member constituting the above air blocking layer shall be explained.
Capable of being preferably used as the member described above is a member having at least one layer (hereinafter referred to as a modified ethylene-vinyl alcohol copolymer layer) containing a modified ethylene-vinyl alcohol copolymer obtained by reacting 1 to 50 mass parts of an epoxy compound with 100 mass parts of an ethylene-vinyl alcohol copolymer having an ethylene unit of 25 to 50 mole %. The above modification makes it possible to reduce an elastic modulus of an unmodified ethylene-vinyl alcohol copolymer to a large extent and makes it possible to improve the breaking property and degree of causing cracks in bending.

In the ethylene-vinyl alcohol copolymer used for the above modification, a content of the ethylene unit is preferably 25 to 50 mole %. From the viewpoint of obtaining good flexibility and good fatigue resistance, a content of the ethylene unit is more suitably 30 mole % or more, further suitably 35 mole % or more. Further, from the viewpoint of the gas barriering property, a content of the ethylene unit is more suitably 48 mole % or less, further suitably 45 mole % or less. When a content of the ethylene unit is less than 25 mole %, the flexibility and the fatigue resistance are likely to be deteriorated, and in addition thereto, the melt molding property is likely to be deteriorated as well. On the other hand, if the content exceeds 50 mole %, the gas barriering property is insufficient in certain cases.
Further, a saponification degree of the ethylene-vinyl alcohol copolymer described above is preferably 90 mole % or more, more preferably 95 mole % or more, further preferably 98 mole % or more and most preferably 99 mole % or more. If the saponification degree is less than 90 mole %, the gas barriering property and the heat stability in producing a laminate are likely to be unsatisfactory.

A suitable melt flow rate (MFR) (190 °C, under a load of 21.18 N) of the ethylene-vinyl alcohol copolymer used for the modifying treatment is 0.1 to 30 g/10 minutes, more suitably 0.3 to 25 g/10 minutes. In the case of the ethylene-vinyl alcohol copolymer having a melting point falling in the vicinity of 190 °C or exceeding 190 °C, MFR is shown by a value obtained by measuring MFR under a load of 21.18 N at plural temperatures which are the melting point or higher and extrapolating them to 190 °C in a single logarithmic graph in which inverse numbers of an absolute temperature is on the ordinate axis and in which a logarithm of MFR is plotted on the abscissa axis.

The modifying treatment can be carried out by reacting preferably 1 to 50 mass parts, more preferably 2 to 40 mass parts and further preferably 5 to 35 mass parts of the epoxy compound with 100 mass parts of the unmodified ethylene-vinyl alcohol copolymer described above. In this case, a suitable solvent is advantageously used to carry out the reaction in a solution.

In the modifying treatment method carried out by a solution reaction, a solution of the ethylene-vinyl alcohol copolymer is reacted with the epoxy compound in the presence of an acid catalyst or an alkali catalyst, whereby the modified ethylene-vinyl alcohol copolymer is obtained. The reaction solvent is preferably a polar aprotic solvent which is a good solvent for ethylene-vinyl alcohol copolymers, such as dimethylsulfoxide, dimethylformamide, dimethylacetamide and N-methylpyrrolidone. The reaction catalyst includes acid catalysts such as p-toluenesulfonic acid, methanesulfonic acid, trifluoromethanesulfonic acid, sulfuric acid and boron trifluoride and alkali catalysts such as sodium hydroxide, potassium hydroxide, lithium hydroxide and sodium methoxide. Among them, the acid catalysts are preferably used. The catalyst amount is suitably about 0.0001 to 10 mass parts per 100 mass parts of the ethylene-vinyl alcohol copolymer. Further, the modified ethylene-vinyl alcohol copolymer can be produced as well by dissolving the ethylene-vinyl alcohol copolymer and the epoxy compound in a reaction solvent to subject them to heat treatment.

The epoxy compound used for the modifying treatment shall not specifically be restricted, and it is preferably a monovalent epoxy compound. When it is a divalent or higher epoxy compound, cross-linking reaction with the ethylene-vinyl alcohol copolymer is caused to produce gel, lumps and the like, whereby the quality of the laminate is likely to be reduced. From the viewpoints of easiness in producing the modified ethylene-vinyl alcohol copolymer, the gas barriering property, the flexibility and the fatigue resistance, the preferred monovalent epoxy compound includes glycidols and epoxypropane.
A melt flow rate (MFR) (190 °C, under a load of 21.18 N) of the ethylene-vinyl alcohol copolymer used in the present invention shall not specifically be restricted, and from the viewpoint of obtaining the good gas barriering property, the good flexibility and the good fatigue resistance, it is preferably 0.1 to 30 g/10 minutes, more preferably 0.3 to 25 g/10 minutes and further preferably 0.5 to 20 g/10 minutes. In the case of modified EVOH having a melting point falling in a vicinity of 190 °C or exceeding 190 °C, MFR is shown by a value obtained by measuring MFR under a load of 21.18 N at plural temperatures which are the melting point or higher and extrapolating them to 190 °C in a single logarithmic graph in which an inverse number of an absolute temperature is on the ordinate axis and in which a logarithm of MFR is plotted on the abscissa axis.

An oxygen permeation amount of the film layer in which the modified ethylene-vinyl alcohol copolymer used for the member constituting the above air blocking layer is used as a material is preferably 3 × 10⁻¹⁵ cm³·cm/cm²·sec·Pa or less, more preferably 7 × 10⁻¹⁶ cm³·cm/cm²·sec·Pa or less and further preferably 3 × 10⁻¹⁶ cm³·cm/cm²·sec·Pa or less at 60 °C and 65 % RH.

In order to use the modified ethylene-vinyl alcohol copolymer for the member constituting the above air blocking layer, the modified ethylene-vinyl alcohol copolymer described above is usually molded into a film, a sheet and the like by melt molding. The melt molding method includes, for example, a T die method, an inflation method and the like. In this case, the melting temperature is, though varied depending on the melting point of the above copolymer and the like, preferably 150 to 170 °C.

In the member constituting the above air blocking layer, the modified ethylene-vinyl alcohol copolymer layer is preferably cross-linked. If the above copolymer layer is not cross-linked, the modified ethylene-vinyl alcohol copolymer layer is notably deformed in a vulcanizing step for producing a pneumatic tire to make it impossible to maintain a homogeneous layer, so that gas barriering property, flexibility and fatigue resistance of the air blocking layer are likely to be deteriorated.
A method for cross-linking the modified ethylene-vinyl alcohol copolymer shall not specifically be restricted, and the preferred method includes a method in which the above copolymer layer is irradiated with an energy beam.
The energy beam includes ionizing radiations such as UV ray, electron beam, X-ray, α-ray, γ-ray and the like. An electron beam is preferred as an energy beam.
An irradiation method of an electron beam includes a method in which a film or a sheet obtained by molding the above copolymer is introduced into an electron beam irradiation apparatus and in which it is irradiated with the electron beam. A dose of the electron beam shall not specifically be restricted, and it preferably falls in a range of 10 to 60 Mrad. If a dose of the electron beam irradiated is lower than 10 Mrad, cross-linking is less liable to proceed. On the other hand, if a dose of the electron beam irradiated exceeds 60 Mrad, deterioration of the film or the sheet is liable to proceed. More suitably, a dose of the electron beam falls in a range of 20 to 50 Mrad.

The member constituting the above air blocking layer may be a molded matter of a single layer comprising the modified ethylene-vinyl alcohol copolymer layer described above or may be a multilayer structure having at least one modified ethylene-vinyl alcohol copolymer layer.
The above multilayer structure includes a structure comprising the above modified ethylene-vinyl alcohol copolymer layer and a layer (hereinafter referred to as a rubber-like elastic body layer) containing a rubber-like elastic body which is adjacent to the copolymer layer.
Further, it includes a structure obtained by sticking the modified ethylene-vinyl alcohol copolymer layer onto the rubber-like elastic body layer via at least one adhesive layer.
The ethylene-vinyl alcohol copolymer has a -OH group, and therefore it is relatively easy to secure adhesion with rubber. Use of, for example, an adhesive of a chlorinated rubber/isocyanate base for the adhesive layer makes it possible to secure adhesion with the rubber composition used for the tire.
The layer structure of the multilayer structure described above includes, for example, A/B1, B1/A/B1, A/Ad/B1, B1/Ad/A/Ad/B1, B1/A/B1/B2, B1/A/B1/Ad/B2 and the like, wherein the modified ethylene-vinyl alcohol copolymer layer is represented by A; the rubber-like elastic body layer is represented by B1 and B2 (B1 and B2 are different layers respectively); and the adhesive layer is represented by Ad. However, the layer structure shall not be restricted to the above structures.

Also, the respective layers may be single layers or may be multilayers in certain cases. Further, when the modified ethylene-vinyl alcohol copolymer layer, the rubber-like elastic body layer and the adhesive layer each are plural, the plural modified ethylene-vinyl alcohol copolymer layers may be the same or different; the plural rubber-like elastic body layers may be the same or different; and the plural adhesive layers may be the same or different.
A method for producing the multilayer structure shall not specifically be restricted and includes, for example, a method in which the rubber-like elastic body and the adhesive layer are melt-extruded onto the molded matter (a film, a sheet and the like) comprising the modified ethylene-vinyl alcohol copolymer, a method in which the modified ethylene-vinyl alcohol copolymer and the adhesive layer are melt-extruded onto the base material of the rubber-like elastic body in a manner contrary to the above, a method in which the modified ethylene-vinyl alcohol copolymer and the rubber-like elastic body (and if necessary, the adhesive layer) are coextrusion-molded, a method in which a molded matter obtained from the modified ethylene-vinyl alcohol copolymer and a film or a sheet of the rubber-like elastic body are laminated via the adhesive layer, and a method in which a molded matter obtained from the modified ethylene-vinyl alcohol copolymer and a film or a sheet of the rubber-like elastic body (and if necessary, an adhesive layer) are stuck together on a drum in molding a tire.

In the member constituting the above air blocking layer, the thickness of the modified ethylene-vinyl alcohol copolymer layer is preferably 50 µm or less. If it exceeds 50 µm, the merit of a decrease in weight of the inner liner using a butyl rubber, a halogenated butyl rubber and the like which are used at present is reduced. From the viewpoint of gas barriering property, flexibility and fatigue resistance, the thickness of the modified ethylene-vinyl alcohol copolymer layer is more preferably 1 to 40 µm, further preferably 5 to 30 µm.
In the modified ethylene-vinyl alcohol copolymer layer in the multilayer structure described above, flexibility and fatigue resistance are enhanced by using a copolymer layer having a thickness of 50 µm or less, and breakage and cracks are less liable to be caused by bending deformation in rolling of the tire. Even if broken, peeling is less liable to be brought about, and cracking is less liable to be extended because of good adhesion of the above modified ethylene-vinyl alcohol copolymer layer with the rubber-like elastic body layer, so that large breakage and cracks are not brought about. When breakage and cracks are caused, a gas barriering property of broken and cracked parts produced in the modified ethylene-vinyl alcohol copolymer layer is supplemented by the rubber-like elastic body layer, and therefore oxygen can be inhibited from being permeated.

The rubber-like elastic body layer in the member constituting the above air blocking layer has preferably an oxygen permeation amount of 3 × 10⁻¹² cm³·cm/cm²·sec·Pa or less at 60 °C and 65 % RH from the viewpoint of a gas barriering property. It is more preferably 7 × 10⁻¹³ cm³·cm/cm²·sec·Pa or less.

A butyl rubber, a diene base rubber and the like are given as suitable examples of the rubber-like elastic body constituting the above rubber-like elastic body layer. The diene base rubber described above is suitably natural rubber, butadiene rubber and the like. From the viewpoint of the gas barriering property, a butyl rubber is preferably used as the rubber-like elastic body, and a halogenated butyl rubber is more preferably used. From the viewpoint of inhibiting cracks from being extended after the cracks described above are produced on the rubber-like elastic body layer, a composition containing a butyl rubber and a diene base rubber is preferably used as the rubber-like elastic body. Use of the above composition as the rubber-like elastic body makes it possible to inhibit oxygen well from being permeated even when fine cracks are produced on the rubber-like elastic body layer.

Further, a thermoplastic urethane base elastomer is preferably used from the viewpoints of a reduction in a thickness of the rubber-like elastic body, production of cracks and inhibition of extension thereof.

The thermoplastic urethane base elastomer (hereinafter abbreviated as TPU) described above is an elastomer having a urethane group (-NH-COO-) in a molecule, and it is produced by intermolecular reaction of three components of (1) polyol (long chain diol), (2) diisocyanate and (3) short chain diol. Polyol and short chain diol are subjected to addition reaction with diisocyanate to produce linear polyurethane. Among the above components, the polyol assumes a soft part (soft segment) in the elastomer, and the diisocyanate and the short chain diol assume a hard part (hard segment). The properties of TPU are under the control of the properties of the raw materials, the polymerization conditions and the blend ratios, and among them, the type of the polyol exerts an influence on the properties of TPU to a large extent. A large part of the basic characteristics of TPU is determined by the kind of the long chain diol, and the hardness thereof is controlled by a proportion of the hard segment.
The kind thereof includes (a) caprolactone type (polylactone ester polyol obtained by subjecting caprolactone to ring opening), (b) adipic acid type (= adipate type) <adipic acid ester polyol of adipic acid and glycol> and (c) PTMG (polytetramethylene glycol) type (= ether type) <polytetramethylene glycol obtained by ring-opening polymerization of tetrahydrofuran>.

The rubber-like elastic body layer in the member constituting the above air blocking layer has a thickness falling in a range of preferably 50 to 1500 µm in total. If the above thickness is less than 50 µm in total, flexibility and fatigue resistance of the air blocking layer are reduced, and breakage and cracks are liable to be caused by bending deformation in running of a tire. Further, cracking is liable to be extended. On the other hand, if the thickness exceeds 1500 µm in total, the merit of a reduction in weight of a pneumatic tire which is used at present is reduced. From the viewpoint of gas barriering property, flexibility and fatigue resistance of the air blocking layer and reduction in weight of the pneumatic tire, the thickness of the rubber-like elastic body layer is more preferably 100 to 1000 µm, further preferably 300 to 800 µm in total.

Next, the present invention shall be explained in further detail with reference to examples, but the present invention shall by no means be restricted by these examples.
The characteristic values of the ethylene-vinyl alcohol copolymer used for modification were measured according to methods shown below.

### (1) Ethylene unit content and saponification degree

Calculated from a spectrum obtained by ¹H-NMR (nuclear magnetic resonance) measurement (using "JNX-GX-500 type" manufactured by JEOL Ltd.) using deuterated dimethylsulfoxide as a solvent.

### (2) Melt flow rate

A sample of an ethylene-vinyl alcohol copolymer was filled into a cylinder having an inner diameter of 9.65 mm and a length of 162 mm in Melt Indexer L244 (manufactured by Takara Industry Co., Ltd.) and molten at 190 °C, and then a load of 21.18 N was evenly applied thereon by means of a plunger.

A resin amount (g/10 minutes) extruded per unit time from an orifice having a diameter of 2.1 mm provided in the center of the cylinder was measured, and this was designated as the melt flow rate. In the case of the ethylene-vinyl alcohol copolymer having a melting point falling in a vicinity of 190 °C or exceeding 190 °C, MFR was shown by a value obtained by measuring MFR under a load of 21.18 N at plural temperatures which were the melting point or higher and extrapolating them to 190 °C in a single logarithmic graph in which an inverse number of the absolute temperature was on the ordinate axis and in which a logarithm of MFR was plotted on the abscissa axis.

### Production Example 1-production of modified ethylene-vinyl alcohol copolymer I

A pressurized reaction bath was charged with 2 mass parts of an ethylene-vinyl alcohol copolymer (MRF: 5.5 g/10 minutes, 190 °C under a load of 21.18 N) having an ethylene unit content of 44 mole % and a saponification degree of 99.9 mole % and 8 mass parts of N-methyl-2-pyrrolidone, and the mixture was heated and stirred at 120°C for 2 hours, whereby the ethylene-vinyl alcohol copolymer was completely dissolved. Glycidol in an amount of 0.4 mass part as an epoxy compound was added thereto and then heated at 160 °C for 4 hours.

After finishing heating, a deposit was precipitated in 100 mass parts of distilled water and washed sufficiently with a large amount of distilled water to remove N-methyl-2-pyrrolidone and unreacted glycidol, whereby a modified ethylene-vinyl alcohol copolymer was obtained. Further, the modified ethylene-vinyl alcohol copolymer thus obtained was crushed to fine particles having a particle diameter of about 2 mm by means of a crusher and then washed again sufficiently with a large amount of distilled water. The particles obtained after washing were dried under vacuum at room temperature for 8 hours, and then they were molten at 200 °C and pelletized by means of a double shaft extruding machine.

### Production Example 2-production of modified ethylene-vinyl alcohol copolymer II

A pressurized reaction bath was charged with 2 mass parts of an ethylene-vinyl alcohol copolymer (MRF: 5.5 g/10 minutes, 190 °C under a load of 21.18 N) having an ethylene unit content of 44 mole % and a saponification degree of 99.9 mole % and 8 mass parts of N-methyl-2-pyrrolidone, and the mixture was heated and stirred at 120°C for 2 hours, whereby the ethylene-vinyl alcohol copolymer was completely dissolved. Epoxypropane in an amount of 0.4 mass part as an epoxy compound was added thereto and then heated at 160 °C for 4 hours.

After finishing heating, a deposit was precipitated in 100 mass parts of distilled water and washed sufficiently with a large amount of distilled water to remove N-methyl-2-pyrrolidone and unreacted epoxypropane, whereby a modified ethylene-vinyl alcohol copolymer was obtained. Further, the modified ethylene-vinyl alcohol copolymer thus obtained was crushed to fine particles having a particle diameter of about 2 mm by means of a crusher and then washed again sufficiently with a large amount of distilled water. The particles obtained after washing were dried under vacuum at room temperature for 8 hours, and then they were molten at 200 °C and pelletized by means of a double shaft extruding machine.

### Production Example 3-production of film 1

The pellets of the modified ethylene-vinyl alcohol copolymer I obtained in Production Example 1 were used to produce a film 1 under the following extruding conditions by means of a film forming machine comprising a 40 mmφ extruding device (PLABOR GT-40-A manufactured by Plastic Engineering Laboratory) and a T die to obtain a single layer film 1 having a thickness of 20 µm.
Type: single shaft extruding machine (non-bent type); L/D: 24; bore diameter: 40 mmφ; screw: single thread full flight type, surface: copper nitride; screw revolution: 40 rpm; dice: 550 mm width coat hanger die; lip gap: 0.3 mm; cylinder, die temperature setting: C1/C2/C3/adaptor/die = 180/200/210/210/210 (°C)

### Production Example 4-production of three layer film 2

The modified ethylene-vinyl alcohol copolymer II (modified EVOH II) obtained in Production Example 2 and thermoplastic polyurethane (Kuramiron 3190 manufactured by Kuraray Co., Ltd.) as an elastomer were used to produce a three layer film 2 (thermoplastic polyurethane layer/modified EVOH II layer/thermoplastic polyurethane layer) under the following coextrusion molding conditions by means of a two-kind three-layer coextruding apparatus. The thicknesses of the respective layers were 20 µm for both the modified EVOH II layer and the thermoplastic polyurethane layer.

### <Coextrusion molding conditions>

Layer structure: thermoplastic polyurethane/modified EVOH II/thermoplastic polyurethane (thickness: 20/20/20; unit: µm) ; extruding temperatures of the respective resins: C1/C2/C3/die = 170/170/220/220 °C; extruding machine specifications of the respective resins: 25 mmφ extruding machine P25-18AC (manufactured by Osaka Seiki Working Co., Ltd.) for thermoplastic polyurethane, 20 mmΦ extruding machine for modified EVOH II, labo machine ME type CO-EXT (manufactured by Toyo Seiki Seisaku-sho, Ltd.); T die specification: for 500 mm width two-kind three-layer (manufactured by Plastic Engineering Laboratory); temperature of cooling roll: 50 °C; receiving speed: 4 m/minute

### Test Example 1

The film 1 produced in Production Example 3 and the film 2 produced in Production Example 4 were evaluated for oxygen permeation amount and flexibility according to the following methods.

### (1) Measurement of oxygen permeation amount

The respective films produced were subjected to humidity conditioning at 20 °C and 65 % RH for 5 days.

Samples of the respective two films in which humidity conditioning was finished were used to measure oxygen permeation amounts under the condition of 20 °C and 65 % RH by means of MOCON OX-TRAN 2/20 type manufactured by Modern Control Co., Ltd. according to a method described in JIS K7126 (isopiestic method) to determine the average value thereof.

### (2) Evaluation of flexibility

Each film was cut to prepare 50 films of 21 cm × 30 cm, and the respective films were subjected to humidity conditioning at 20 °C and 65 % RH for 5 days. Then, they were bent at bending frequencies of 50 times, 75 times, 100 times, 125 times, 150 times, 175 times, 200 times, 225 times, 250 times, 300 times, 400 times, 500 times, 600 times, 700 times, 800 times, 1000 times and 1500 times according to ASTM F 392-74 by means of a gerbo flex tester manufactured by Rigaku Kogyo Co., Ltd., and then the number of pinholes was measured.

Measurement was carried out five times in the respective bending frequencies to set the average value thereof as the pinhole number. The measuring results were plotted, wherein the bending frequency (P) was allotted to the abscissa, and the pinhole number was allotted to the ordinate. A bending frequency (Np1) when the pinhole number was 1 was determined by extrapolation, and the significant number was set to the second digit. In the case of the films in which pinholes were not observed at a bending frequency of 1500 times, the bending frequency was increased thereafter by 500 times, and the bending frequency at which pinholes were observed was set as Np1.

An oxygen permeation amount of the film 1 was 2.6 × 10⁻¹⁶ cm³·cm/cm²·sec·Pa, and excellent gas barriering property was shown.
Further, flexibility of the film 1 was evaluated according to the method described above to find that Np1 was 500 times and that excellent flexibility was shown.
An oxygen permeation amount of the film 2 was 2.6 × 10⁻¹⁶ cm³·cm/cm²·sec·Pa, and excellent gas barriering property was shown.
Further, a flexibility of the film 2 was evaluated according to the method described above to find that Np1 was 5000 times and that excellent flexibility was shown.

### Examples 1 to 5

The films of kinds shown in Table 1 were used and subjected to cross-linking treatment by irradiating the respective films with an electron beam under the conditions of an accelerating voltage of 200 kV and an irradiating energy of 30 Mrad by means of an electron beam irradiating apparatus "Curetron EBC200-100 for production" manufactured by Nissin High Voltage Co., Ltd. "Metaloc R30M" manufactured by Toyo Kagaku Kenkyusho Co., Ltd. was applied as an adhesive on one surface of the cross-linked film obtained above and stuck on a place shown in Table 1 in a form shown in Table 1, and then a tire (11R22.5 14PR) for trucks and buses was produced by a conventional method.

The tire produced above was charged with oxygen at an air pressure of 900 kPa and left standing at 60°C for one month, and then it was subjected to a drum test under the conditions of a load of 6270 kg and a speed 60 km/hour in order to confirm durability of a bead part. The travel distance and the oxygen increasing amount in the rubber at the ply end part were measured. Both values were shown by indices, wherein values obtained in Comparative Example 1 were set as controls, and the results thereof are shown in Table 1. In the case of the travel distance, the tire having a larger index shows that it traveled a longer distance, and in the case of the oxygen increasing amount, the smaller numerical value shows smaller increasing amount.

The oxygen increasing amount in the rubber at the ply end part was measured by means of "Varico EC III CHNSO element analyzer" manufactured by Nihon Siber Hegner Co., Ltd.

### Example 6

The same procedure as in Examples 1 to 5 was carried out, except that a three layer film was used as the film and that the inner liner layer using a butyl base rubber was not provided in the tire.

### Comparative Examples 1 to 3

The same procedure as in Examples 1 to 6 was carried out, except that the films were not stuck. The results thereof are shown in Table 1.

**Table 1**

| | | Comparative Example | | | Example | | | | | |
|---|---|---|---|---|---|---|---|---|---|---|
| | | 1 | 2 | 3 | 1 | 2 | 3 | 4 | 5 | 6* |
| Distance of inner liner end (mm) from toe tip | | -40 | 0 | 20 | -40 | 0 | 20 | -40 | -40 | None |
| Position of end Position of end of air blocking layer | Inner liner side | None | None | None | -45 | -10 | -10 | -45 | Whole surface | whole surface |
| | Rubber chafer side | None | None | None | 0 | 10 | 25 | 10 | 10 | 10 |
| Oxygen increasing amount (index) in the rubber at ply end | | 100 | 85 | 75 | 50 | 35 | 15 | 45 | 35 | 45 |
| Travel distance (index) on drum in durability test of bead part after charged with oxygen at 60 °C for one month | | 100 | 115 | 130 | 150 | 200 | 250 | 180 | 200 | 180 |

| | | | | | | | | | | |
|---|---|---|---|---|---|---|---|---|---|---|
| *: an inner liner was not present, and a three layer film was used | | | | | | | | | | |

Remarks:
"Whole surface" in the film disposing range indicates a whole surface of an inner side in the inner liner layer.
In "Distance from the toe tip", (-) indicates the inner liner side, and (+) indicates the rubber chafer side.

The present invention can provide a tire for heavy loading which is inhibited from being deteriorated due to permeation of oxygen to enhance the durability of a bead part and which can stand use over a long period of time by disposing a member having an excellent oxygen permeation resistance and an excellent flexibility at least in the periphery of a bead centering on a bead toe part of the tire.
Further, a conventional inner liner can be reduced in thickness or removed, and the tire can be reduced in weight.

## Claims

1. A tire for heavy loading in which an inner surface is covered with an inner liner, wherein an air blocking layer having a thickness of 1 mm or less and an oxygen permeation amount of 3 × 10⁻¹³ cm³·cm/cm²·sec·Pa or less at 60 °C and 65 % RH is provided on a whole outermost layer of an inner liner layer so that an end of the air blocking layer is set within 100 mm from a toe tip of a bead part in a direction along a bead base line.

2. A tire for heavy loading in which an inner surface is covered with an inner liner, wherein an air blocking layer having a thickness of 1 mm or less and an oxygen permeation amount of 3 × 10⁻¹³ cm³·cm/cm²·sec·Pa or less at 60 °C and 65 % RH is provided on a whole outermost layer of an inner liner layer so that an end of the air blocking layer is set within 10 mm from a toe tip of a bead part in a direction along an inner surface of the tire.

3. A tire for heavy loading in which an inner surface is covered with an inner liner, wherein an air blocking layer having a thickness of 1 mm or less and an oxygen permeation amount of 3 × 10⁻¹³ cm³·cm/cm²·sec·Pa or less at 60 °C and 65 % RH is provided so that an end of the air blocking layer is set within 10 mm from a toe tip of a bead part in a direction along an inner surface of the tire; the
other end thereof is overlapped partially with the inner liner; and the overlapped part is provided on an outermost layer of the inner liner layer.

4. A tire for heavy loading as claimed in any of claims 1 to 3 wherein a toe rubber is provided at a toe tip of the bead part, and a rubber composition in which 20 to 40 mass % of a rubber component comprises a butyl rubber and/or a halogenated butyl rubber is used for the above toe rubber.

5. A tire for heavy loading as claimed in any of claims 1 to 4 wherein the air blocking layer comprises at least one layer containing a modified ethylene-vinyl alcohol copolymer obtained by reacting 1 to 50 mass parts of an epoxy compound with 100 mass parts of an ethylene-vinyl alcohol copolymer having an ethylene unit of 25 to 50 mole %.

6. A tire for heavy loading as claimed in claim 5. wherein the epoxy compound is glycidol or epoxypropane.

7. A tire for heavy loading as claimed in claim 5 or 6, wherein the ethylene-vinyl alcohol copolymer having an ethylene unit of 25 to 50 mole % which is used for modification has a saponification degree of 90 mole % or more.

8. A tire for heavy loading as claimed in any of claims 5 to 7, wherein the layer containing the modified ethylene-vinyl alcohol copolymer is a layer having an oxygen permeation amount of 3 × 10⁻¹⁵ cm³·cm/cm²·sec·Pa or less at 60 °C and 65 % RH.

9. A tire for heavy loading as claimed in any of claims 5 to 8, wherein the layer containing the modified ethylene-vinyl alcohol copolymer is a cross-linked layer.

10. A tire for heavy loading as claimed in any of claims 5 to 9, wherein the layer containing the modified ethylene-vinyl alcohol copolymer is a layer having a thickness of 50 µm or less.

11. A tire for heavy loading as claimed in any of claims 5 to 10, wherein the air blocking layer comprises the layer containing the modified ethylene-vinyl alcohol copolymer and a layer containing a rubber-like elastic body which is adjacent to the layer.

12. A tire for heavy loading as claimed in claim 11, wherein the air blocking layer is obtained by sticking the layer containing the modified ethylene-vinyl alcohol copolymer onto the layer containing the rubber-like elastic body via at least one adhesive layer.

13. A tire for heavy loading as claimed in claim 11 or 12, wherein the layer containing the rubber-like elastic body is a layer having an oxygen permeation amount of 3 × 10⁻¹² cm³·cm/cm²·sec·Pa or less at 20 °C and 65 % RH.

14. A tire for heavy loading as claimed in any of claims 11 to 13, wherein the layer containing the rubber-like elastic body is a layer containing a butyl rubber and/or a halogenated butyl rubber.

15. A tire for heavy loading as claimed in any of claims 11 to 14, wherein the layer containing the rubber-like elastic body is a layer containing a diene base rubber.

16. A tire for heavy loading as claimed in any of claims 11 to 15, wherein the layer containing the rubber-like elastic body is a layer containing a thermoplastic urethane base elastomer.

17. A tire for heavy loading as claimed in any of claims 11 to 16, wherein the air blocking layer is obtained by sticking layers containing different rubber-like elastic bodies via at least one adhesive layer.

18. A tire for heavy loading as claimed in any of claims 11 to 17, wherein a thickness of the layer containing the rubber-like elastic body is 300 to 800 µm in total.

## Patentansprüche

1. Reifen für schwere Belastung, in dem eine Innenfläche mit einer Innenschicht überzogen ist, wobei eine Luftsperrlage, die eine Dicke von 1 mm oder weniger und eine Sauerstoff-Durchgangsmenge von 3 × 10⁻¹³ cm³·cm/cm²·s·Pa oder weniger bei 60°C und 65 % rel. Feuchtigkeit hat, auf einer gesamten äußersten Lage einer Innenschichtlage bereitgestellt wird, so dass ein Ende der Luftsperrlage innerhalb von 100 mm von einer Zehenspitze eines Wulstteils in einer Richtung längs einer Wulst-Grundlinie festgesetzt ist.

2. Reifen für schwere Belastung, in dem eine Innenfläche mit einer Innenschicht überzogen ist, wobei eine Luftsperrlage, die eine Dicke von 1 mm oder weniger und eine Sauerstoff-Durchgangsmenge von 3 × 10⁻¹³ cm³·cm/cm²·s·Pa oder weniger bei 60°C und 65 % rel. Feuchtigkeit hat, auf einer gesamten äußersten Lage einer Innenschichtlage bereitgestellt wird, so dass ein Ende der Luftsperrlage innerhalb von 10 mm von einer Zehenspitze eines Wulstteils in einer Richtung längs einer Innenfläche des Reifens festgesetzt ist.

3. Reifen für schwere Belastung, in dem eine Innenfläche mit einer Innenschicht überzogen ist, wobei eine Luftsperrlage, die eine Dicke von 1 mm oder weniger und eine Sauerstoff-Durchgangsmenge von 3 × 10⁻¹³ cm³·cm/cm²·s·Pa oder weniger bei 60°C und 65 % rel. Feuchtigkeit hat, bereitgestellt wird, so dass ein Ende der Luftsperrlage innerhalb von 10 mm von einer Zehenspitze eines Wulstteils in einer Richtung längs einer Innenfläche des Reifens festgesetzt ist, das andere Ende teilweise mit der Innenschicht überlappt ist und der überlappte Teil auf einer äußersten Lage der Innenschichtlage bereitgestellt wird.

4. Reifen für schwere Belastung nach einem der Ansprüche 1 bis 3, wobei ein Zehenkautschuk an einer Zehenspitze des Wulstteils bereitgestellt wird und eine Kautschukzusammensetzung, bei der 20 bis 40 Masse-% eines Kautschukbestandteils einen Butylkautschuk und/oder einen halogenierten Butylkautschuk umfassen, für den obigen Zehenkautschuk verwendet wird.

5. Reifen für schwere Belastung nach einem der Ansprüche 1 bis 4, wobei die Luftsperrlage wenigstens eine Lage umfasst, die ein modifiziertes Ethylen-Vinylalkohol-Copolymer enthält, gewonnen durch das Reagierenlassen von 1 bis 50 Masseteilen einer Epoxid-Verbindung mit 100 Masseteilen eines Ethylen-Vinylalkohol-Copolymers, das eine Ethylen-Einheit von 25 bis 50 Mol-% hat.

6. Reifen für schwere Belastung nach Anspruch 5, wobei die Epoxid-Verbindung Glycidol oder Epoxypropan ist.

7. Reifen für schwere Belastung nach Anspruch 5 oder 6, wobei das Ethylen-Vinylalkohol-Copolymer, das eine Ethylen-Einheit von 25 bis 50 Mol-% hat, das zur Modifikation verwendet wird, einen Verseifungsgrad von 90 Mol-% oder mehr hat.

8. Reifen für schwere Belastung nach einem der Ansprüche 5 bis 7, wobei die Lage, die das modifizierte Ethylen-Vinylalkohol-Copolymer enthält, eine Lage ist, die eine Sauerstoff-Durchgangsmenge von 3 × 10⁻¹⁵ cm³·cm/cm²·s·Pa oder weniger bei 60°C und 65 % rel. Feuchtigkeit hat.

9. Reifen für schwere Belastung nach einem der Ansprüche 5 bis 8, wobei die Lage, die das modifizierte Ethylen-Vinylalkohol-Copolymer enthält, eine quervernetzte Lage ist.

10. Reifen für schwere Belastung nach einem der Ansprüche 5 bis 9, wobei die Lage, die das modifizierte Ethylen-Vinylalkohol-Copolymer enthält, eine Lage ist, die eine Dicke von 50 µm oder weniger hat.

11. Reifen für schwere Belastung nach einem der Ansprüche 5 bis 10, wobei die Luftsperrlage die Lage, die das modifizierte Ethylen-Vinylalkohol-Copolymer enthält, und eine Lage, die eine kautschukartige elastische Masse enthält, die an die Lage angrenzt, umfasst.

12. Reifen für schwere Belastung nach Anspruch 11, wobei die Luftsperrlage gewonnen wird durch das Kleben der Lage, die das modifizierte Ethylen-Vinylalkohol-Copolymer enthält, auf die Lage, welche die kautschukartige elastische Masse enthält, über wenigstens eine Klebstofflage.

13. Reifen für schwere Belastung nach Anspruch 11 oder 12, wobei die Lage, welche die kautschukartige elastische Masse enthält, eine Lage ist, die eine Sauerstoff-Durchgangsmenge von 3 × 10⁻¹² cm³·cm/cm²·s·Pa oder weniger bei 20°C und 65 % rel. Feuchtigkeit hat.

14. Reifen für schwere Belastung nach einem der Ansprüche 11 bis 13, wobei die Lage, welche die kautschukartige elastische Masse enthält, eine Lage ist, die einen Butylkautschuk und/oder einen halogenierten Butylkautschuk enthält.

15. Reifen für schwere Belastung nach einem der Ansprüche 11 bis 14, wobei die Lage, welche die kautschukartige elastische Masse enthält, eine Lage ist, die einen Kautschuk auf Dien-Grundlage enthält.

16. Reifen für schwere Belastung nach einem der Ansprüche 11 bis 15, wobei die Lage, welche die kautschukartige elastische Masse enthält, eine Lage ist, die ein thermoplastisches Elastomer auf Urethan-Grundlage enthält.

17. Reifen für schwere Belastung nach einem der Ansprüche 11 bis 16, wobei die Luftsperrlage gewonnen wird durch das Kleben von Lagen, die unterschiedliche kautschukartige elastische Massen enthalten, über wenigstens eine Klebstofflage.

18. Reifen für schwere Belastung nach einem der Ansprüche 11 bis 17, wobei eine Dicke der Lage, welche die kautschukartige elastische Masse enthält, insgesamt 300 bis 800 µm beträgt.

## Revendications

1. Bandage pneumatique pour chargement lourd, dans lequel une surface interne est recouverte d'une gomme intérieure, une couche de blocage de l'air, ayant une épaisseur de 1 mm ou moins et une valeur de perméation de l'oxygène de 3 × 10⁻¹³ cm³ ·cm/cm²·sec·Pa ou moins en présence d'une température de 60°C et d'une humidité relative de 65 %, étant agencée sur l'ensemble de la couche externe extrême d'une couche de gomme intérieure, de sorte qu'une extrémité de la couche de blocage de l'air est ajustée dans le cadre de 100 mm à partir d'une pointe de talon d'une partie de talon dans une direction s'étendant le long d'une ligne de base du talon.

2. Bandage pneumatique pour chargement lourd, dans lequel une surface interne est recouverte d'une gomme intérieure, une couche de blocage de l'air, ayant une épaisseur de 1 mm ou moins et une valeur de perméation de l'oxygène de 3 × 10⁻¹³ cm³·cm/m²·sec·Pa ou moins en présence d'une température de 60°C et d'une humidité relative de 65 %, étant agencée sur l'ensemble de la couche externe extrême d'une couche de gomme intérieure, de sorte qu'une extrémité de la couche de blocage de l'air est ajustée dans le cadre de 10 mm à partir d'une pointe de talon d'une partie de talon dans une direction s'étendant le long d'une ligne de base du talon.

3. Bandage pneumatique pour chargement lourd, dans lequel une surface interne est recouverte d'une gomme intérieure, et comportant une couche de blocage de l'air, ayant une épaisseur de 1 mm ou moins et une valeur de perméation de l'oxygène de 3 × 10⁻¹³ cm³·cm/cm²·sec·Pa ou moins en présence d'une température de 60°C et d'une humidité relative de 65 %, de sorte qu'une extrémité de la couche de blocage de l'air est ajustée dans le cadre de 10 mm à partir d'une pointe de talon d'une partie de talon dans une direction s'étendant le long d'une surface interne du bandage pneumatique ; l'autre extrémité de celle-ci étant chevauchée en partie par la gomme intérieure ; la partie à chevauchement étant agencée sur la couche externe extrême de la couche de gomme intérieure.

4. Bandage pneumatique pour chargement lourd selon l'une quelconque des revendications 1 à 3, dans lequel une gomme de la pointe du talon est agencée au niveau d'une pointe de talon de la partie de talon, une composition de caoutchouc, dans lequel 20 à 40 % en poids d'un composant de caoutchouc comprennent un caoutchouc butyle et/ou un caoutchouc butyle halogéné, étant utilisée pour la gomme de la pointe de talon ci-dessus.

5. Bandage pneumatique pour chargement lourd selon l'une quelconque des revendications 1 à 4, dans lequel la couche de blocage de l'air comprend au moins une couche contenant un copolymère d'éthylène alcool de vinyle modifié produit par réaction de 1 à 50 parties en poids d'un composant époxyde avec 100 parties en poids d'un copolymère d'éthylène alcool de vinyle ayant une unité éthylène représentant 25 à 50 % en moles.

6. Bandage pneumatique pour chargement lourd selon la revendication 5, dans lequel le composant époxyde est du glycidol ou de l'époxypropane.

7. Bandage pneumatique pour chargement lourd selon les revendications 5 ou 6, dans lequel le copolymère éthylène alcool de vinyle ayant une unité éthylène représentant 25 à 50 % en moles utilisée pour la modification, présente un degré de saponification de 90 % en moles ou plus.

8. Bandage pneumatique pour chargement important selon l'une quelconque des revendications 5 à 7, dans lequel la couche contenant le copolymère éthylène alcool de vinyle modifié est une couche présentant une valeur de perméation de l'oxygène de 3 x 10⁻¹⁵ cm³·cm/cm²·sec·Pa ou moins en présence d'une température de 60°C et d'une humidité relative de 65 %.

9. Bandage pneumatique pour chargement important selon l'une quelconque des revendications 5 à 8, dans lequel la couche contenant le copolymère éthylène alcool de vinyle modifié est une couche réticulée.

10. Bandage pneumatique pour chargement lourd selon l'une quelconque des revendications 5 à 9, dans lequel la couche contenant le copolymère éthylène alcool de vinyle modifié est une couche ayant une épaisseur de 50 µm ou moins.

11. Bandage pneumatique pour chargement lourd selon l'une quelconque des revendications 5 à 10, dans lequel la couche de blocage de l'air comprend la couche contenant le copolymère éthylène alcool de vinyle modifié et une couche contenant un corps élastique de type caoutchouc, adjacent à la couche.

12. Bandage pneumatique pour chargement lourd selon la revendication 11, dans lequel la couche de blocage de l'air est produite en collant la couche contenant le copolymère éthylène alcool de vinyle modifié sur la couche contenant le corps élastique de type caoutchouc via au moins une couche adhésive.

13. Bandage pneumatique pour chargement lourd selon l'une quelconque des revendications 11 ou 12, dans lequel la couche contenant le corps élastique de type caoutchouc est une couche présentant une valeur de perméation de l'oxygène de 3 x 10⁻¹² cm³·cm/cm²·sec·Pa ou moins en présence d'une température de 20°C et d'une humidité relative de 65 %.

14. Bandage pneumatique pour chargement lourd selon l'une quelconque des revendications 11 à 13, dans lequel la couche contenant le corps élastique de type caoutchouc est une couche contenant un caoutchouc butyle et/ou un caoutchouc butyle halogéné.

15. Bandage pneumatique pour chargement lourd selon l'une quelconque des revendications 11 à 14, dans lequel la couche contenant le corps élastique de type caoutchouc est une couche contenant un caoutchouc à base de diène.

16. Bandage pneumatique pour chargement lourd selon l'une quelconque des revendications 11 à 15 dans lequel la couche contenant le corps élastique de type caoutchouc est une couche contenant un élastomère thermoplastique à base d'uréthane.

17. Bandage pneumatique pour chargement lourd selon l'une quelconque des revendications 11 à 16, dans lequel la couche de blocage de l'air est produite par collage de couches contenant différents corps élastiques du type caoutchouc via au moins une couche adhésive.

18. Bandage pneumatique pour chargement lourd selon l'une quelconque des revendications 11 à 17, dans lequel une épaisseur de la couche contenant le corps élastique de type caoutchouc est comprise en tout entre 300 et 800 µm.
